# EUROPÄISCHE PATENTSCHRIFT

(11) **EP 0 964 743 B1**
(45) Veröffentlichungstag und Bekanntmachung des Hinweises auf die Patenterteilung: **05.06.2002**
(21) Anmeldenummer: 98913623.9
(22) Anmeldetag: 03.03.1998
(51) Int. Cl.: B01J 12/00, B01J 19/26, C01B 5/00

(54) **VORRICHTUNG ZUM BESEITIGEN VON WASSERSTOFF**
DEVICE FOR ELIMINATING HYDROGEN
DISPOSITIF PERMETTANT D'ELIMINER DE L'HYDROGENE

(30) Priorität: 04.03.1997 DE 19708738
(43) Veröffentlichungstag der Anmeldung: 22.12.1999
(73) Patentinhaber: FORSCHUNGSZENTRUM JÜLICH GMBH, 52425 Jülich (DE)
(72) Erfinder: BRÖCKERHOFF, Peter, D-52428 Jülich (DE); VON LENSA, Werner, D-52379 Langerwehe (DE); REINECKE, Ernst-Arndt, D-52064 Aachen (DE)
(74) Vertreter: Rox, Thomas
(86) Internationale Anmeldenummer: EP9801176
(87) Internationale Veröffentlichungsnummer: WO9839091

(56) Entgegenhaltungen:
- WO-A-96/18218
- DE-A- 2 852 019
- DE-A- 4 221 693
- DE-B- 1 063 291
- US-A- 3 755 075
- US-A- 4 119 706

## Beschreibung

Die Erfindung betrifft eine Vorrichtung zum Beseitigen von Wasserstoff, bei der mittels katalytischer Rekombination insbesondere bei Störfällen zum Zwecke der Sicherheit sowohl große als auch kleine Wasserstoffmengen beseitigt werden können.

In.verschiedenen Anlagen der Energie- und Verfahrenstechnik besteht nach dem Eintreten von Störfällen die Gefahr des Austritts von Wasserstoff. Dabei kann, wenn Sauerstoff vorhanden ist, ein brennbares Gasgemisch entstehen, das entweder turbulent deflagieren oder detonieren kann. Bei der Detonation kann die erzeugte Druckwelle die Komponenten einer Anlage oder die Anlage selbst gefährden oder sogar zerstören und die Umgebung belasten. Als Beispiele seien hier genannt Störfälle in wassergekühlten Kernreaktoren und Anlagen, in denen Wasserstoff hergestellt und verarbeitet wird, oder in künftigen wärme- und stromerzeugenden mit Wasserstoff betriebenen Systemen, z.B. Brenner oder Brennstoffzellen für den stationären und mobilen Betrieb. Auch beim Betrieb von Akkumulatoren oder bei der Erzeugung von Reinstwasser auf elektrolytischem Weg kann Wasserstoff entstehen und austreten. Dies macht effektive Maßnahmen zu seiner Beseitigung erforderlich.

Große Wasserstoffmengen sind bei schweren Störfällen, z.B. in mit leichtem oder schwerem Wasser gekühlten Kernreaktoren mit nichtinertisierten Containments, zu erwarten. Der Wasserstoff entsteht in diesen Reaktoren bei einem Ausfall relevanter Sicherheitseinrichtungen und der nachfolgenden Überhitzung des Reaktorkerns durch Reaktion des Wasserdampfes mit den Hüllen der Brennelemente. Dabei können bei einem großen wassergekühlten Reaktor in wenigen Stunden etwa bis zu 20.000 m_{N}³ Wasserstoff in den Sicherheitsbehälter oder das Containment freigesetzt werden.

Aus dem Stand der Technik sind verschiedene Vorrichtungen zur Beseitigung von Wasserstoff bekannt, bei denen eine Inertisierung der Gasvolumina mit Stickstoff angewendet wird, wie bspw. auch bei Siedewasserreaktoren. Weiterhin sind aus dem Stand der Technik katalytische Rekombinatoren als Vorrichtungen zur Beseitigung von Wasserstoff bekannt. Mit deren Hilfe wird der entstandene Wasserstoff sowohl innerhalb als auch außerhalb der Zündgrenzen exotherm katalytisch rekombiniert, d.h. unter Entstehung von Wärme in Wasserdampf umgesetzt. Wasserstoffgehalte mit Konzentration innerhalb der Zündgrenzen lassen sich darüber hinaus auch konventionell nach Fremdzündung abbrennen. Die dabei auftretenden Vorgänge sind jedoch nur schwer oder gar nicht kontrollierbar, so daß es unter Umständen zu den bereits oben genannten anlagengefährdenden Reaktionen kommen kann. Weiterhin sind aus dem Stand der Technik katalytische Systeme bekannt, die passiv, d.h. ohne Ansteuerung und ohne Zufuhr von Strom, also ohne Beheizung und Zwangsdurchströmung, den Wasserstoff mit dem Sauerstoff der Luft in Wasserdampf umwandeln.

Als Substrate werden sowohl metallische Folien als auch hochporöses Granulat verwendet, auf die Platin bzw. Palladium als Katalysator aufgebracht ist. Mehrere Folien und Granulatpakete - das Granulat wird von Drahtnetzen zu Paketen zusammengehalten - sind vertikal und parallel zueinander in Blechgehäusen angeordnet. Das Wasserstoff-/Luftgemisch tritt unten in das Gehäuse ein. An den katalytisch beschichteten Oberflächen setzt die Reaktion ein. Das Gemisch bzw. die Reaktionsprodukte überströmen die Oberflächen infolge des entstehenden thermischen Auftriebs. Sie werden im Sicherheitsbehälter so angeordnet, daß ihre Wärmeabgabe möglichst in derselben Richtung erfolgt wie die beim großen Störfall auftretenden großräumigen Konvektionsbewegungen.

Als Nachteil ist die Art der Gemischbildung in den großen Volumina der Containments anzusehen, d.h. die Reaktionspartner Sauerstoff und Wasserstoff werden den Rekombinatoren so zugeführt, wie sie entstehen bzw. örtlich vorliegen. Eine gezielte Vor- oder Vermischung vor Eintritt in die Rekombinatoren gibt es nicht. Die maximalen Abbauraten bzw. thermischen Leistungen sind aufgrund der Überströmung der Oberflächen und der niedrigen Wärmeabfuhr infolge Konvektion begrenzt. Außerdem ist die Möglichkeit zur Wärmespeicherung gering. Zu große Wasserstoffmengen können zu einer Überhitzung der beschichteten Substrate führen, so daß die Zündgrenze erreicht oder überschritten wird und es infolgedessen zu homogenen Gasphasenreaktionen mit Deflagration bzw. Detonation kommen kann.

Trotz der großen freien Oberfläche des Rekombinators, bei dem poröses Granulat als Substrat verwendet wird, ist die Wirksamkeit geringer als die eines anderen Systems, für das ebene Folien benutzt werden. Denn das Brenngas-/Luftgemisch erreicht bei einer Überströmung der beschichteten Substrate nicht alle katalytischen Zentren. Die Reaktion findet lediglich an der Oberfläche statt. Außerdem ist die Strömung laminar, d.h. der Queraustausch ist nur gering. Nicht alle Moleküle gelangen an die wirksamen Oberflächen. Dies gilt auch für eine Konstruktion, die Platten oder Folien verwendet. In allen Systemen ist die Reaktion unvollständig.

Die Abfuhr der Reaktionswärme aus den bekannten Systemen ist grundsätzlich problematisch. Die Reaktionswärme wird fast ausschließlich über Konvektion von den festen Oberflächen an die vorbeiströmenden Gase sowie Wärmestrahlung an die benachbarten Strukturen abgeführt. Aufgrund der geringen Bauhöhen ist der Auftrieb innerhalb des Rekombinators gering. Die Strömung ist laminar, der Wärmeübergangskoeffizient infolgedessen klein. Als Nachteil ist auch die zusätzliche Aufheizung der Umgebung anzusehen.

Als nächstkommender Stand der Technik, von dem die vorliegende Erfindung ausgeht, offenbart die DE 42 21 693 A ein Verfahren und eine Vorrichtung zur thermischen Rekombination eines Gases eines Gasgemisches in der Containment-Atmosphäre einer Kernreaktoranlage. Dazu ist ein die Entstehungsquelle des Wasserstoffes aufweisener Primärraum, ein Reaktionsraum und eine als Düse ausgebildete Durchtrittsöffnung vorgesehen, die den Primärraum und den Reaktionsraum miteinander verbindet. Für eine Umsetzung der im Containment entstehenden Wasserstoff- oder Sauerstoffmengen wird aus außerhalb des Containments angeordneten Druckbehältern mit Hilfe einer im Notfall zu bedienenden Ventilsteuerung Treibgas oder Reaktionsgas zugeführt. Mittels einer derart beaufschlagten Treibdüse innerhalb der als Mischkammer ausgebildeten Durchtrittsöffnung wird das im Containment vorhandene Gasgemisch in die Vorrichtung eingezogen, so daß das derart angereicherte Gasgemisch in die Reaktionskammer einströmt und an den Oberflächen des darin angeordneten Katalysatorelementes rekombiniert wird. Der Gasauslaß aus der Reaktionskammer ist dann zur Containment-Atmosphäre hin geöffnet, so daß der gesamte durch das Treibgas hervorgerufene Gasgemischstrom innerhalb des Containments verläuft.

Die US-A-4,119,706 offenbart einen katalytischen Reaktor, bei dem gasförmige oder dampfförmige Reaktanten in Kontakt mit einem in Teilchenform vorliegenden katalytischen Material gebracht werden, um die gewünschte katalytische Reaktion zu bewirken. Dazu weist der Reaktor eine horizontal angeordnete Reaktionszone auf, durch die der Fluß der gas- oder dampfförmigen Reaktanten von einem Ende zum anderen Ende der Reaktionszone durchläuft. In der Reaktionszone ist das katalytische Material angeordnet, wobei der gesamte Querschnitt der Gasführung mit dem katalytischen Material ausgefüllt ist. Dadurch wird sichergestellt, daß die Reaktanten nahezu vollständig in Kontakt mit dem katalytischen Material für die gewünschte katalytische Reaktion kommen. Nachteilig bei dieser Vorrichtung ist, daß das Gasgemisch bestehend aus Wasserstoff und Sauerstoff durch einen Reaktor durchströmt, der entlang der gesamten Länge des Strömungsweges denselben Querschnitt aufweist. Daher entstehen innerhalb des Strömungsweges nur geringe Druckdifferenzen, so daß zur Beeinflussung der katalytischen Reaktion keine passiven Vorrichtungen zum Zuführen von beispielsweise Sauerstoff zum Erzeugen eines geeigneten Mischungsverhältnisses von Wasserstoff und Sauerstoff vorgesehen sind.

Aus der US-A-3,755,075 ist weiterhin ein Rekombinator bekannt, der bei niedrigen Drücken von Wasserstoff und Sauerstoff als Gasgemisch durch ein katalytisches Bett transportiert. Dabei wird eine als Kühlvorrichtung dienender Kondensator zur Erzeugung eines Druckunterschiedes zwischen der Eingangsseite und der Ausgangsseite des katalytischen Bettes verwendet. Daher können nur geringe Wasserstoffmengen durch diese Vorrichtung umgesetzt werden.

Die Aufgabe der vorliegenden Erfindung besteht daher darin, eine Vorrichtung zum Beseitigen von Wasserstoff anzugeben, bei der sowohl große als auch kleine Wasserstoffmengen nach guter Durchmischung mit Luft oder nach Luftzufuhr in einem weiten Konzentrationsbereich kontrolliert umgesetzt werden.

Die zuvor aufgezeigte Aufgabe wird erfindungsgemäß durch eine Vorrichtung zum Beseitigen von Wasserstoff gemäß Anspruch 1 gelöst.

Zunächst werden die für die Rekombination notwendigen katalytischen Oberflächen in der Nähe des Ortes angeordnet, an dem der Wasserstoff freigesetzt wird. Der durch die Freisetzung des Wasserstoffes entstehende Druck im Primärraum wird ausgenutzt, um den Wasserstoff durch die Durchtrittsöffnung aufgrund des Druckgefälles hindurch in den Reaktionsraum zu führen. Dabei wird weitgehend sichergestellt, daß die durch die Wasserstoffmengen bestehende Explosionsgefahr auf den inneren Bereich der zu schützenden Anlage beschränkt ist und in Strömungsrichtung des Wasserstoffes dahinterliegenden Räume in geeigneter Weise geschützt werden. Weiterhin ist der Reaktionsraum außerhalb des Primärraumes angeordnet, so daß bei einem Druckanstieg innerhalb des Primärraumes selbständig eine Gasströmung durch die Durchtrittsöffnung entsteht. Somit wird auch verhindert, daß ein kritischer Überdruck im Primärraum entstehen kann.

Weiterhin ist die Durchtrittsöffnung als Düse ausgebildet, wobei vorzugsweise die Form einer Venturidüse gewählt wird. Der innerhalb der Düse auftretende Druckabfall zwischen der Eintritts- und Austrittsseite kann dann dazu genutzt werden, die Bedingungen der Rekombination in geeigneter Weise zu beeinflussen. So kann beispielsweise über eine gesonderte Leitung Sauerstoff, im allgemeinen Luft, aufgrund des innerhalb der Düse entstehenden Unterdruckes zugeführt werden. Dieser Sauerstoff wird dann im Bereich der Durchtrittsöffnung dem Wasserstoffstrom zugesetzt, wobei dieses vorzugsweise in einem räumlichen Bereich geschieht, der in Strömungsrichtung vor dem Katalysatorelement liegt. Dadurch kann auch bei großen Wasserstoffmengen eine ausreichende Versorgung mit Sauerstoff gewährleistet werden, die für eine nahezu vollständige Umsetzung des Wasserstoffes bei der katalytischen Rekombination benötigt wird.

In gleicher Weise wird der Druckabfall innerhalb der Düse dazu verwendet, Wasser über eine ebenfalls separate Leitung zuzuführen, das im Austrittsbereich der Düse einströmt, vorzugsweise versprüht wird. Somit wird in vorteilhafter Weise eine effektive Kühlung der Rekombinationsprodukte erreicht. Bei nicht vollständiger Umsetzung des Wasserstoffes, also bei sehr hohen anfallenden Wasserstoffmengen, werden somit die Zündtemperaturen der wasserstoffhaltigen Atmosphäre im Reaktionsraum nicht erreicht oder überschritten.

In einer ersten Anordnung ist die Düse im wesentlichen waagerecht angeordnet, so daß ein Gasgemischstrom zwischen den durch die Durchtrittsöffnung, bzw. die Düse verbundenen Räumen in horizontaler Richtung möglich ist. Somit erfolgt immer dann, wenn ein Überdruck auf der Primärraumseite vorhanden ist, eine Strömung durch die Düse hindurch. Die Vorrichtung zum Beseitigen von Wasserstoff ist somit ständig, also auch bei geringen Überdrücken, einsatzbereit.

In einer zweiten Anordnung ist die Düse im wesentlichen senkrecht angeordnet, wobei die Düse zunächst so angeordnet ist, daß die Eintrittsöffnung oberhalb und die Austrittsöffnung unterhalb der Wasseroberfläche angeordnet ist. Dadurch ist die Düse im normalen Druckbereich durch den Wasserspiegel verschlossen. Nur dann, wenn ein genügend hoher Druck im Sekundärraum aufgebaut worden ist, kann der Wasserspiegel zurückgedrängt werden, so daß die Austrittsöffnung der Düse freigelegt wird. In diesem Fall erfolgt die Strömung des Wasserstoff-/Luftgemisches durch die Düse hindurch, so daß eine Rekombination erfolgen kann. Bei diesem Strömungsverlauf wird in vorteilhafter Weise eine direkte Abgabe der Reaktionswärme an das Wasser gewährleistet.

Ebenso ist auch eine umgekehrte Ausrichtung der Düse möglich, bei der die Eintrittsöffnung unterhalb und die Austrittsöffnung oberhalb der Wasseroberfläche angeordnet ist. Dabei wird dann die Eintrittsöffnung der Düse im Normalzustand durch das Wasser verschlossen und nur bei einem Überdruck freigegeben. Dadurch wird gewährleistet, daß erst oberhalb eines durch die Anordnung vorgegebenen Druckes ein Wasserstoff-/Luftgemischstrom durch die Düse erfolgt, der zuvor durch das Wasser geströmt ist, also bereits abgekühlt worden ist.

Die Querschnitte der Durchtrittsöffnungen und die zu überwindenden Druckdifferenzen sind so auszulegen, daß sowohl für kleine als auch große Wasserstoffdurchsätze eine geeignete Rekombination des Wasserstoffes gewährleistet ist. Das bedeutet, daß auch bei kleinen Durchsätzen hinreichend große Strömungsgeschwindigkeiten, d.h. Unterdrücke, zur Beimischung von Luft als Reaktionspartner und Wasser als Kühlung sichergestellt werden. Für größer werdende Durchsätze bedeutet dies, daß nach und nach - abhängig vom treibenden Druckgefälle - größere Querschnitte freigegeben und damit auch höhere Rekombinationsleistungen verfügbar gemacht werden.

Die Durchtrittsöffnung kann weiterhin auch durch mechanische Mittel wie Verschlußklappen oder Ventile im Normalzustand verschlossen sein. Dadurch wird derselbe Effekt erreicht, daß also bei zunehmenden zu rekombinierenden Wasserstoffmengen weitere Durchtrittsöffnungen zugeschaltet werden können.

In einer weiteren bevorzugten Ausgestaltung der erfindungsgemäßen Vorrichtung ist direkt am Primärraum ein Sekundärraum angeordnet, der über eine Verbindungsleitung mit dem Primärraum verbunden ist. Dabei ist die Durchtrittsöffnung zwischen dem Sekundärraum und dem Reaktionsraum angeordnet, so daß die Durchtrittsöffnung den Primärraum über den Sekundärraum mit dem Reaktionsraum verbindet. Die Anordnung des Sekundärraumes bietet den Vorteil, daß die nachfolgend beschriebenen Versorgungseinrichtungen sowie Kühlvorrichtungen in einem separaten Raum einfacher angeordnet werden können, als es beispielsweise im Primärraum der Fall ist, der im Falle von Kernreaktoren die Sicherheitszelle ist. Daher sind im Sekundärraum unter anderem auch nicht die hohen Sicherheitsvorkehrungen notwendig.

Ein weiterer Vorteil der erfindungsgemäßen Vorrichtung zum Beseitigen von Wasserstoff besteht darin, daß das Katalysatorelement im wesentlichen den Querschnitt der Durchtrittsöffnung vollständig ausfüllt. Da das Katalysatorelement als Netz, Matte, Streckmetall, Faserpackung oder als Schüttung eines Schüttgutes ausgestaltet ist und somit eine poröse Struktur aus metallischem oder keramischem Werkstoff darstellt, wird der zu rekombinierende Wasserstoffstrom nahezu vollständig an der katalytischen Oberfläche des Katalysatorelementes vorbeigeführt, während der Wasserstoff durch die Durchtrittsöffnung strömt. Im Gegensatz zu den aus dem Stand der Technik bekannten Vorrichtungen wird das Katalysatorelement bei der vorliegenden Erfindung durchströmt, und nicht nur lediglich überströmt. Somit gelangen sehr viele oder fast alle Brenngas-/Luftmoleküle an die aktiven Zentren und reagieren dort, so daß ein erheblich größerer Anteil von umgesetztem, d.h. rekombiniertem Wasserstoff erreicht wird. Dabei wird die Grenze der vollständigen Rekombination erreicht.

In weiterer bevorzugter Weise sind der Sekundärraum und der Reaktionsraum teilweise mit Wasser gefüllt. Dieses dient in vorteilhafter Weise einer geeigneten Abkühlung der Reaktionsedukte sowie der Reaktionsprodukte. Denn sowohl die hohe Temperatur des Wasserstoffgases, das aus dem Primärraum kommt, als auch die bei der Rekombination entstehende Reaktionswärme müssen abgeführt werden, damit die Zündtemperatur des Wasserstoff-/Luftgemisches nicht überschritten wird und somit eine spontane Entzündung des Gemisches verhindert wird. Daher wird über eine Verbindungsleitung der Wasserstoff aus dem Primärraum in den Sekundärraum derart eingeleitet, daß der Wasserstoff durch das Wasser hindurch in den Sekundärraum eindringt. Somit ist eine effektive Kühlung des Wasserstoffgases bereits vor der Rekombination möglich.

Das im Reaktionsraum angeordnete Wasser dient weiterhin dazu, nach der erfolgten Rekombination den erzeugten Wasserdampf abzukühlen und somit die bei der Rekombination erzeugte Reaktionswärme aufzunehmen. Weiterhin sind die Wände der erfindungsgemäßen Vorrichtung so massiv ausgebildet, daß auch in den Wänden ein Teil der Reaktionswärme gespeichert bzw. durch diese abgeführt werden kann. Insgesamt wird somit erreicht, daß die Umgebung der erfindungsgemäßen Vorrichtung zum Beseitigen von Wasserstoff nicht zu stark aufgeheizt wird. Ein unerwünschter Anstieg des Druckes im Behälter wird durch Kühlung des Abgases mit Wassereindüsung erreicht. Zudem können die massiven Wände starke Druckstöße auffangen, die bei Störfällen auftreten.

Im folgenden wird die Erfindung anhand von Ausführungsbeispielen näher erläutert, wozu auf die Zeichnung Bezug genommen wird. In der Zeichnung zeigt
- Fig. 1: im Längsschnitt ein erstes Ausführungsbeispiel einer erfindungsgemäßen Vorrichtung zum Beseitigen von Wasserstoff,
- Fig. 2: im Längsschnitt ein zweites Ausführungsbeispiel einer erfindungsgemäßen Vorrichtung zum Beseitigen von Wasserstoff,
- Fig. 3: ein drittes Ausführungsbeispiel einer erfindungsgemäßen Vorrichtung zum Beseitigen von Wasserstoff und
- Fig. 4: im Querschnitt die in den Fig. 2 und 3 dargestellten Vorrichtungen.

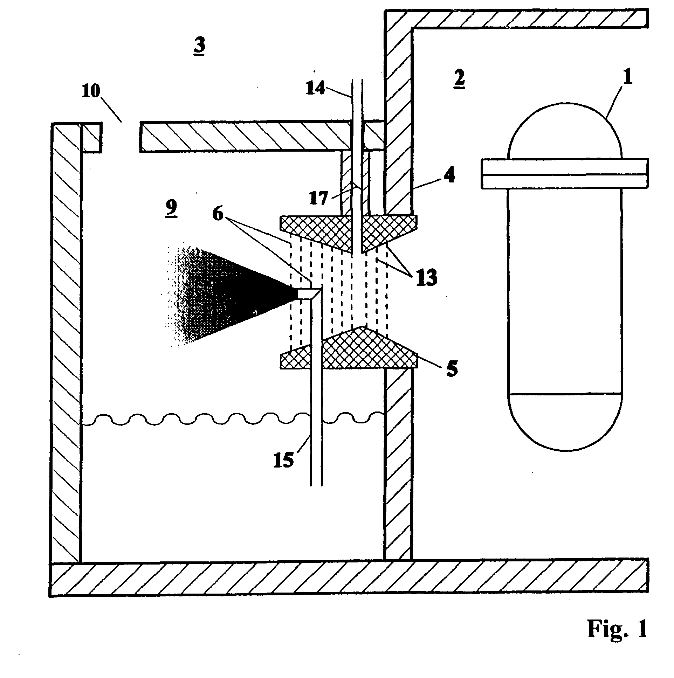

In Fig. 1 ist ein erstes Ausführungsbeispiel einer erfindungsgemäßen Vorrichtung zum Beseitigen von Wasserstoff dargestellt. Diese Vorrichtung weist einen die Entstehungsquelle 1 des Wasserstoffes aufweisenden Primärraum 2 auf, der an einen Reaktionsraum 9 angrenzt und von diesem über eine Trennwand 4 abgetrennt ist. In der Trennwand 4 ist eine Durchtrittsöffnung 5 angeordnet, die den Primärraum 2 mit dem Reaktionsraum 9 verbindet. Entsteht nun im Primärraum 2 ein Überdruck an Wasserstoff, so strömt der Wasserstoff mit einem Teil der sich im Primärraum 2 befindenden Luft durch die Durchtrittsöffnung 5 in den Reaktionsraum 9. Durch die Anordnung der Durchtrittsöffnung 5 wird somit gezielt.ein Ausströmen an bestimmten Stellen aus dem Primärraum 2 erreicht.

In der Durchtrittsöffnung 5 ist weiterhin ein poröses Katalysatorelement 6 angeordnet, das zumindest teilweise mit Katalysatormaterial beschichtet ist. Im Falle eines Wasserstoffüberdruckes und des daraus sich ergebenden Stromes des Wasserstoff-/Luftgemisches durch die Durchtrittsöffnung 5 hindurch findet somit zwangsläufig eine Rekombinationsreaktion an der Oberfläche des Katalysatorelementes 6 statt.

Aus der Anordnung der Durchtrittsöffnung 5 sowie aus deren Ausgestaltung ergeben sich verschiedene Vorteile. Zunächst wird der Wasserstoff an gezielt vorgegeben Stellen aus dem Primärraum 2 abgeführt. Dieses geschieht automatisch, ohne daß es einer äußeren Steuerung oder Energiezufuhr bedarf. Somit werden keine großen Überdrücke im Primärraum 2 aufgebaut. Durch die Anordnung des Katalysatorelementes 6 innerhalb der Durchtrittsöffnung 5 wird darüber hinaus gewährleistet, daß bereits mit dem Austritt des Wasserstoffgases aus dem Primärraum 2 dieser mit dem Sauerstoff aus der Umgebungsluft rekombiniert wird. Dadurch wird sichergestellt, daß in den den Primärraum 2 umgebenden Räumen keine explosisionsgefährlichen Wasserstoff-/Luftgemische größeren Ausmaßes entstehen können.

Erfindungsgemäß ist die Durchtrittsöffnung 5, wie in den Fig. 1 bis 3 dargestellt ist, als Düse ausgestaltet. Dabei wird als Düsenform vorzugsweise die Venturidüse verwendet. Durch die besondere Ausgestaltung des Querschnittes einer Venturidüse, der sich in Strömungsrichtung zunächst verjüngt und danach wieder erweitert, tritt nach dem Durchtritt des Gastroms durch die engste Stelle einer Venturidüse ein Druckabfall auf. Dieser Druckabfall wird in vorteilhafter Weise ausgenutzt, wie im folgenden beschrieben wird.

Für eine möglichst vollständige Rekombination des Wasserstoffes ist eine ausreichende Versorgung des Gasgemisches mit Sauerstoff notwendig. Daher wird Sauerstoff über eine Leitung 14 in die Düse 5 von außen zugeführt. Als Sauerstoffquelle dient dabei vorzugsweise die Atmosphäre des Abluftraumes 3. Aufgrund des entstehenden Unterdruckes innerhalb der Düse 5 wird der Sauerstoff dem Wasserstoffstrom beigemischt, so daß nachfolgend im Katalysatorelement 6 die Rekombination stattfinden kann. Die Einleitung des Sauerstoffes innerhalb der Düse 5 geschieht dabei vorzugsweise durch eine Mehrzahl von Eintrittsöffnungen, die beispielsweise ringförmig im Bereich der engsten Stelle der Venturidüse 5 angeordnet sind. Zur Sicherheit ist in der Leitung 14 ein Rückschlagventil 17 angeordnet, das einen Wasserstoffstrom in den Abluftraum 3 verhindert.

Für eine ausreichende Kühlung der Rekombinationsgase wird weiterhin mittels einer Leitung 15 Wasser zugeführt. Dieses Wasser wird dabei vorzugsweise aus der sich im Reaktionsraum 9 befindenden Wassermenge entnommen. Wegen des in der Venturidüse 5 entstehenden Unterdruckes ist für den Transport des Wassers keine zusätzliche Energie von außen notwendig, sofern die Düse hinreichend nah am Wasserspiegel angeordnet ist.

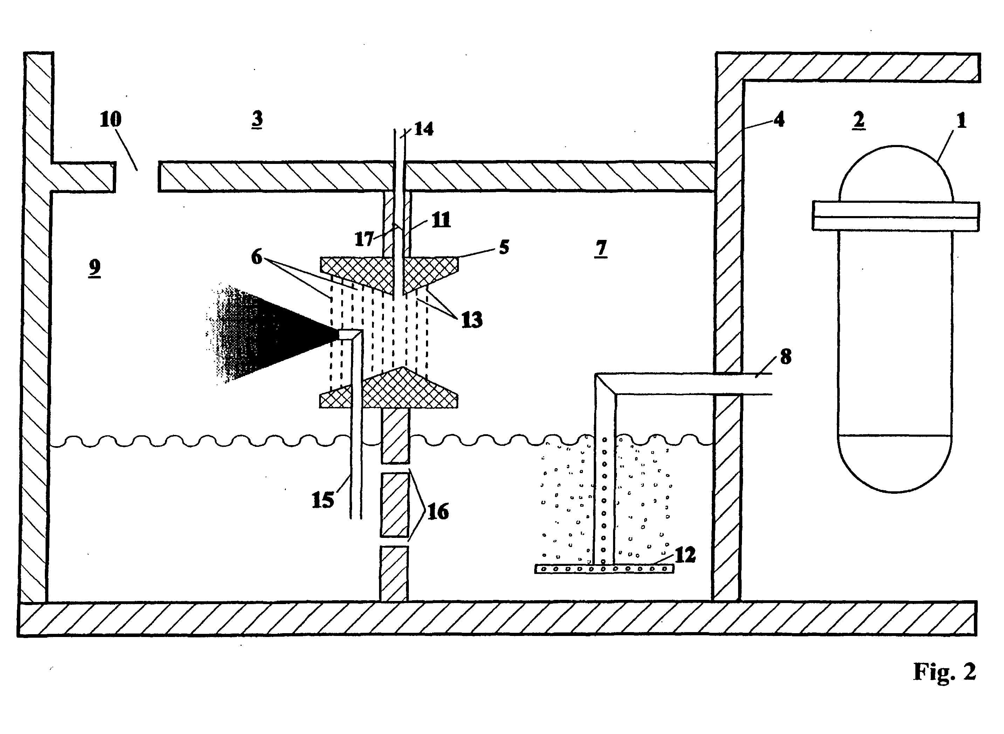

Das Wasser wird - wie in den Fig. 1 und 2 dargestellt ist - zentral in den Wasserstoffstrom eingeführt. Eine Verteilung des Wassers durch eine Mehrzahl von Öffnungen im Gehäuse der Düse 5 ist ebenso möglich.

Das eingeströmte, vorzugsweise versprühte Wasser wird nun teilweise durch die in den Rekombinationsgasen gespeicherten Wärmemengen verdampft, so daß es zu einer direkten Kühlung der Rekombinationsgase kommt. Der übrige Teil des sich im Rekombinationsgasstrom befindenden Wassers kühlt wiederum den entstandenen Wasserdampf ab und fällt zum Teil zurück in das sich am Boden des Reaktionsraumes 9 befindende Wasser. Insgesamt wird somit ein großer Teil der Reaktionswärme auch bei großen Wasserstoffmengen in das Wasservolumen überführt. Dadurch wird in effektiver Weise verhindert, daß die Zündtemperatur des wasserstoffhaltigen Gasgemisches erreicht wird, eine unkontrollierte Zündung des Gasgemisches wird somit verhindert.

Wie in den Fig. 1 und 2 dargestellt ist, ist die Längsachse der Düse 5 im wesentlichem waagerecht angeordnet. Dadurch wird eine ständige Verbindung zwischen dem Primärraum 2 und dem Reaktionsraum 9 aufrechterhalten, so daß schon bei geringen Überdrücken ein Strom des Wasserstoff-/Luftgemisches durch die Düse 5 hindurch auftritt. Durch geeignete Wahl des Durchmessers der Düse 5 werden auch bei geringen Überdrücken genügend hohe Strömungsgeschwindigkeiten erreicht, so daß der entstehende Druckabfall innerhalb der Düse 5 eine geeignete Versorgung des Wasserstoff-/Luftstromes mit Sauerstoff und Wasser gewährleistet. Dieses ist bei zu großen Querschnitten der Düse 5 und geringen Überdrücken nicht der Fall.

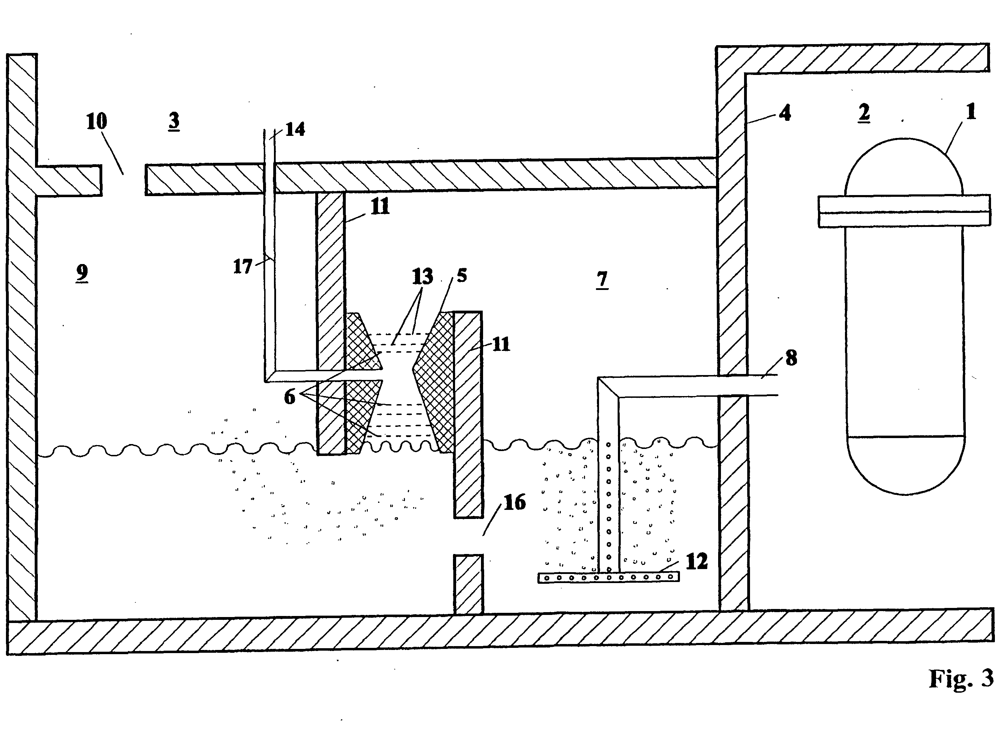

Daher wird weiter vorgeschlagen, daß die Längsachse der Düse 5 im wesentlichen senkrecht angeordnet ist, wie es in Fig. 3 dargestellt ist. Dabei ist die Eintrittsöffnung der Düse 5 oberhalb der Wasseroberfläche angeordnet, während die Austrittsöffnung unterhalb der Wasseroberfläche liegt. Im Normalfall und bei nur geringen Überdrücken ist die in Fig. 3 dargestellte Düse somit verschlossen. Steigt wegen großer anfallender Wasserstoffmengen der Überdruck im Primärraum 2 bzw. im Sekundärraum 7 soweit an, daß der Wasserspiegel im Sekundärraum 7 und in der Austrittsöffnung der Düse 5 abgesenkt wird, so wird ab einer bestimmten Absenkung des Wasserspiegels die Austrittsöffnung der Düse 5 freigelegt. Somit kann das Wasserstoff-/Luftgemisch durch die Düse 5 strömen und mittels der Katalysatorelemente 6 rekombiniert werden. Ein Einsprühen von Wasser ist in diesem Fall nicht notwendig, da die Rekombinationsgase nach ihrer Entstehung direkt durch das Wasser geleitet werden.

In einer weiteren, nicht dargestellten Anordnungsweise ist die Ausrichtung der Düse umgekehrt. Dabei befindet sich die Eintrittsöffnung der Düse unterhalb und die Austrittsöffnung oberhalb der Wasseroberfläche. Auch hierbei ist die Düse im Normalfall und bei geringen Überdrücken verschlossen. Erst dann, wenn durch die anfallenden Wasserstoffmengen der Überdruck groß genug geworden ist, um den Wasserspiegel im Sekundärraum abzusenken, wird die Eintrittsöffnung der Düse freigelegt, so daß ein Strom des Wasserstoff-/Luftgemisches durch die Düse hindurch erfolgt. Dabei wird in vorteilhafter Weise das Wasserstoff-/Luftgemisch vor der Rekombination innerhalb des Katalysatorelementes gekühlt.

Eine weitere bevorzugte Ausgestaltung der vorliegenden Erfindung ist in Fig. 2 dargestellt. Hier ist ein an den Primärraum 2 angrenzender Sekundärraum 7 vorgesehen, wobei der Primärraum 2 und der Sekundärraum 7 über eine Verbindungsleitung 8 verbunden sind. Weiterhin ist ein Abluftraum 3 vorgesehen, der mit dem Reaktionsraum 9 über eine Öffnung 10 verbunden ist. Zwischen dem Sekundärraum 7 und dem Reaktionsraum 9 ist eine Trennwand 11 vorgesehen. Die Durchtrittsöffnung 5 ist in der Trennwand 11 angeordnet und verbindet somit den Primärraum 2 mit dem Reaktionsraum 9 über den Sekundärraum 7.

Wie in Fig. 2 dargestellt ist, sind der Sekundärraum 7 und der Reaktionsraum 9 teilweise mit Wasser gefüllt. Dieses Wasser dient hauptsächlich der Kühlung der beiden Räume 7 und 9, und es wird dazu wie folgt verwendet. Die Verbindungsleitung 8 taucht in das im Sekundärraum 7 angeordnete Wasser ein, so daß das einströmende Wasserstoff-/Wasserdampf-/Luftgemisch durch das Wasser aufsteigt und somit weitgehend vom umgebenden Wasser gekühlt bzw. kondensiert wird. Dieser Abkühlungseffekt wird durch Verwendung eines Spargers 12 verstärkt, der zu einer starken Auffächerung und Versprudelung des einströmenden Gasgemisches führt. Das Wasserstoff-/Luftgemisch sammelt sich dann oberhalb der Wasseroberfläche im Sekundärraum 7 an, so daß sich ein Überdruck aufbaut. Die Drucksituation stellt sich daher ähnlich dar, wie sie in Verbindung mit Fig. 1 dargestellt worden ist, wobei der Druckaufbau dort im Primärraum 2 direkt an der Durchtrittsöffnung 5 auftritt. Bei der in Fig. 2 dargestellten Ausführungsform wird dagegen in vorteilhafter Weise das Wasserstoff-/Wasserdampf-/Luftgemisch vor dem Eintritt in die Durchtrittsöffnung 5 abgekühlt. Dabei wird der Wasserdampf kondensiert und folglich das Volumen verringert.

In der Trennwand 11 sind weiterhin Öffnungen 16 für einen Austausch des Wassers zwischen dem Sekundärraum 7 und dem Reaktionsraum 9 vorgesehen.

Die Durchtrittsöffnung 5 weist, wie oben beschrieben wurde, ein Katalysatorelement 6 auf, das im wesentlichen den Querschnitt der Durchtrittsöffnung 5 ausfüllt. Dadurch wird in besonders vorteilhafter Weise erreicht, daß das poröse Katalysatorelement 6 vom Wasserstoff-/Luftstrom und dem Wasserdampf durchströmt wird. Das Katalysatorelement 6 besteht nun aus einer Hintereinanderschaltung von porösen Katalysatorstrukturen wie beispielsweise Netzen, Matten, Faserpackungen, Streckmetallen oder auch aus Schüttungen eines porösen Katalysatorschüttgutes. Dadurch tritt dem Wasserstoff-/Luftstrom eine Vielzahl von katalytischen Oberflächen des Katalysatorelementes 6 entgegen. Durch den porösen und vielschichtigen Aufbau des Katalysatorelementes 6 kommt es daneben auch zu Verwirbelungen, so daß insgesamt eine sehr hohe Wahrscheinlichkeit besteht, daß sehr viele oder fast alle Wasserstoff-/Luftmoleküle an die aktiven Zentren gelangen und dort reagieren. Als Katalysatormaterial wird dabei vorzugsweise Platin oder Palladium als Oberflächenbeschichtung des Katalysatorelementes 6 verwendet.

Das zuvor beschriebene Katalysatorelement 6 befindet sich innerhalb der Durchtrittsöffnung 5, wobei strömungsaufwärts im Eintrittsbereich der Durchtrittsöffnung 5 unbeschichtete Elemente 13 angeordnet sind. Diese unbeschichteten porösen Elemente 13, beispielsweise Netze, dienen als Flammensperre oder als Rückschlagsicherung. Aus der Anordnung von unbeschichteten Elementen 13 und den Katalysatorelementen 6 ergibt sich somit während des Stromes des Wasserstoff-/Luftgemisches durch die Durchtrittsöffnung 5 hindurch, daß das Gemisch erst bei Kontakt mit dem Katalysatorelement 6 rekombiniert wird.

Damit sowohl bei geringen als auch bei großen anfallenden Wasserstoffmengen ein geeigneter Schutz der Anlage gewährleistet ist, werden mehrere Durchtrittsöffnungen 5 mit unterschiedlichen Durchmessern verwendet, wobei Durchtrittsöffnungen 5 mit größerem und mit großen Querschnitten im Normalfall und bei geringen Überdrükken verschlossen sind. Erst dann, wenn größere Wasserstoffmengen anfallen und somit der Druck anwächst, werden nach und nach weitere Durchtrittsöffnungen durch ein Absenken des Wasserspiegels geöffnet, um auch die großen anfallenden Wasserstoffmengen in geeigneter Weise zu rekombinieren.

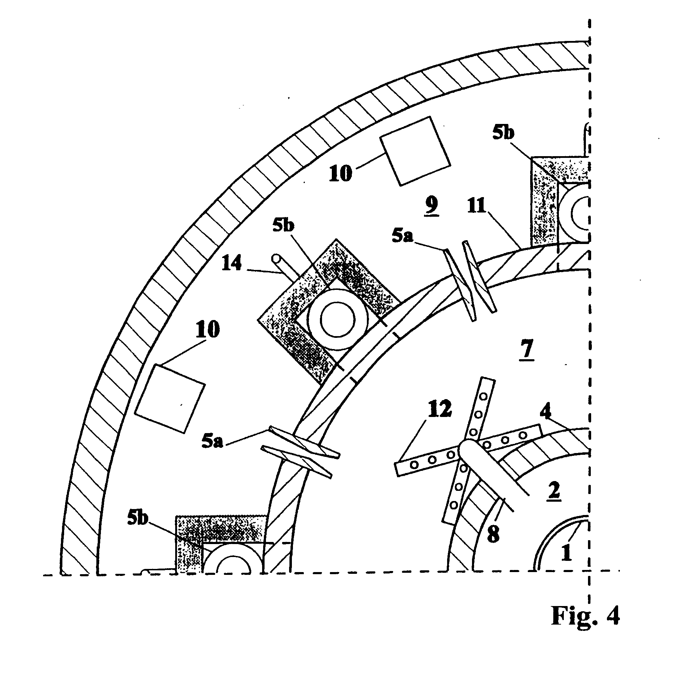

In Fig. 4 ist schließlich eine derartige Anordnung von Durchtrittsöffnungen am Beispiel des Primärraumes 2 eines Kernreaktors, also der Sicherheitszelle, dargestellt. Der anfallende Wasserstoff wird durch die Verbindungsleitung 8 über den Sparger 12 in das sich im Sekundärraum 7 befindende Wasser eingeführt.

Durchtrittsöffnungen 5a, die als Venturidüsen mit im wesentlichen horizontal ausgerichteter Längsachse ausgestaltet sind, verbinden den Sekundärraum 7 mit dem Reaktionsraum 9. Die Durchtrittsöffnungen 5a weisen dabei einen geringen Querschnitt auf, so daß auch bei geringen Wasserstoffmengen eine geeignete Strömung durch die Venturidüse erfolgt.

Weiterhin sind Durchtrittsöffnungen 5b vorhanden, die als Venturidüsen mit im wesentlichen senkrecht angeordneter Längsachse ausgestaltet sind. Die Durchtrittsöffnung 5b ist im Normalfall und bei geringen Wasserstoffüberdrücken dadurch geschlossen, daß entweder die Eintritts- oder die Austrittsöffnung unterhalb des Wasserspiegels angeordnet ist. Weiterhin weist die Durchtrittsöffnung 5b einen im Vergleich zur Durchtrittsöffnung 5a größeren Querschnitt auf. Das Wasserstoff-/Luftgemisch strömt daher erst dann durch die Durchtrittsöffnung 5b, wenn eine genügende Menge an Wasserstoff angefallen ist. Der Überdruck reicht dann aus, um den Wasserspiegel soweit abzusenken, daß die Durchtrittsöffnung 5b freigegeben wird und somit eine Rekombination auch in der Durchtrittsöffnung 5b stattfinden kann.

## Patentansprüche

1. Vorrichtung zum Beseitigen von Wasserstoff
- mit einem die Entstehungsquelle (1) des Wasserstoffes aufweisenden Primärraum (2),
- mit einem Reaktionsraum (9) und
- mit einer als Düse ausgebildeten Durchtrittsöffnung (5), die den Primärraum (2) und den Reaktionsraum (9) miteinander verbindet,
**dadurch gekennzeichnet,**
- **daß** der Reaktionsraum (9) außerhalb des Primärraumes (2) angeordnet ist, so daß bei einem Druckanstieg innerhalb des Primärraumes (2) selbständig eine Gasströmung durch die Durchtrittsöffnung (5) entsteht, und
- **daß** in der Durchtrittsöffnung (5) ein poröses Katalysatorelement (6) angeordnet ist, das mit einem Katalysatormaterial zumindest teilweise beschichtet ist.

2. Vorrichtung nach Anspruch 1, **dadurch gekennzeichnet, daß** die Durchtrittsöffnung (5) als Venturidüse ausgebildet ist.

3. Vorrichtung nach Anspruch 1 oder 2, **dadurch gekennzeichnet, daß** Sauerstoff über eine Leitung (14) zugeführt wird und daß der Sauerstoff im Eintrittsbereich der Düse (5) in den Wasserstoff einströmt.

4. Vorrichtung nach Anspruch 1, 2 oder 3, **dadurch gekennzeichnet, daß** Wasser über eine Leitung (15) zugeführt wird und daß das Wasser in den Gasgemischstrom innerhalb der Düse (5), vorzugsweise im Austrittsbereich, einströmt.

5. Vorrichtung nach einem der Ansprüche 1 bis 4, **dadurch gekennzeichnet,**
- **daß** ein direkt an den Primärraum (2) angrenzender Sekundärraum (7) vorgesehen ist,
- **daß** eine Verbindungsleitung (8) zwischen dem Primärraum (2) und dem Sekundärraum (7) vorgesehen ist,
- **daß** die Durchtrittsöffnung (5) zwischen dem Sekundärraum (7) und dem Reaktionsraum (9) angeordnet ist und
- **daß** die Durchtrittsöffnung (5) den Primärraum (2) über den Sekundärraum (7) mit dem Reaktionsraum (9) verbindet.

6. Vorrichtung nach einem der Ansprüche 1 bis 5, **dadurch gekennzeichnet, daß** der Reaktionsraum (9) und ggf. der Sekundärraum (7) teilweise mit Wasser gefüllt sind und vorzugsweise daß die Verbindungsleitung (8) in das im Sekundärraum (7) angeordnete Wasser eintaucht.

7. Vorrichtung nach Anspruch 6, **dadurch gekennzeichnet, daß** die Längsachse der Düse (5) im wesentlichen senkrecht angeordnet ist und daß die Eintrittsöffnung der Düse (5) oberhalb und die Austrittsöffnung der Düse (5) unterhalb der Wasseroberfläche angeordnet ist.

8. Vorrichtung nach Anspruch 6, **dadurch gekennzeichnet, daß** die Längsachse der Düse (5) im wesentlichen senkrecht angeordnet ist und daß die Eintrittsöffnung der Düse (5) unterhalb und die Austrittsöffnung der Düse (5) oberhalb der Wasseroberfläche angeordnet ist.

9. Vorrichtung nach einem der Ansprüche 1 bis 8, **dadurch gekennzeichnet, daß** die Durchtrittsöffnung (5) durch eine mechanische Klappe ,oder durch ein Ventil verschließbar ist.

10. Vorrichtung nach einem der Ansprüche 7 bis 9, **dadurch gekennzeichnet, daß** eine Mehrzahl von Durchtrittsöffnungen (5) zwischen dem Primärraum (2) und dem Reaktionsraum (8) angeordnet ist, wobei die Durchtrittsöffnungen (5) bei unterschiedlichen Druckdifferenzen zwischen Primärraum (2) und dem Reaktionsraum (8) öffnen.

11. Verfahren zum Beseitigen von Wasserstoff,
- bei dem der durch die Freisetzung von Wasserstoff innerhalb eines Primärraumes (2) entstehende Druckanstieg gegenüber einem außerhalb des Primärraumes (2) angeordneten Reaktionsraum (8) ausgenutzt wird, um ohne Zuführung äußerer Energie eine Gasströmung durch eine den Primärraum (2) und den Reaktionsraum (8) verbindende Durchtrittsöffnnung (5) zu erzeugen,
- bei dem im Bereich der Durchtrittsöffnung (5) mit Hilfe des Katalysatorelementes (6) der durchtretende Wasserstoff zumindest teilweise rekombiniert wird,
- bei dem innerhalb der in Düsenform ausgebildeten Durchtrittsöffnung (5) ein Druckabfall erzeugt wird und
- bei dem mit Hilfe des Druckabfalls mindestens ein die Bedingungen der Rekombination beeinflussendes Mittel eingeleitet wird.

12. Verfahren nach Anspruch 11, bei dem mit Hilfe des Unterdruckes innerhalb der Durchtrittsöffnung (5) ein sauerstoffhaltiges Gas, vorzugsweise Luft, und/oder Wasser zugeführt wird.

13. Verfahren nach Anspruch 11 oder 12, bei dem eine Mehrzahl von Durchtrittsöffnungen (5) verwendet wird und bei dem sich die verschiedenen Durchtrittsöffnungen (5) in Abhängigkeit vom im Primärraum (2) vorhandenen Druck selbstätig öffnen und schließen und somit unterschiedliche Strömungsquerschnitte geschaffen werden.

## Claims

1. A device for eliminating hydrogen
- having a primary chamber (2) having the source (1) where hydrogen is formed,
- having a reaction chamber (9) and
- having a through opening (5) in the form of a nozzle which connects the primary chamber (2) to the reaction chamber (9),
**characterised**
- **in that** the reaction chamber (9) is arranged outside the primary chamber (2) so that when there is a rise in pressure inside the primary chamber (2) a gas flow through the through opening (5) is automatically produced, and
- **in that** a porous catalyst element (6) is arranged in the through opening (5) and is at least partly coated with a catalyst material.

2. A device according to Claim 1, **characterised in that** the through opening (5) is constructed as a venturi nozzle.

3. A device according to Claim 1 or 2, **characterised in that** oxygen is supplied by way of a line (14) and **in that** the oxygen flows into the hydrogen in the inlet region of the nozzle (5).

4. A device according to Claim 1, 2 or 3, **characterised in that** water is supplied by way of a line (15) and **in that** the water flows into the gas mixture current within the nozzle (5), preferably in the outlet region.

5. A device according to one of Claims 1 to 4, **characterised**
- **in that** a secondary chamber (7) directly adjacent to the primary chamber (2) is provided,
- **in that** a connection line (8) is provided between the primary chamber (2) and the secondary chamber (7),
- **in that** the through opening (5) is arranged between the secondary chamber (7) and the reaction chamber (9), and
- **in that** the through opening (5) connects the primary chamber (2) to the reaction chamber (9) by way of the secondary chamber (7).

6. A device according to one of Claims 1 to 5, **characterised in that** the reaction chamber (9) and where appropriate the secondary chamber (7) are partly filled with water and preferably **in that** the connection line (8) dips into the water arranged in the secondary chamber (7).

7. A device according to Claim 6, **characterised in that** the longitudinal axis of the nozzle (5) is arranged to be substantially perpendicular, and **in that** the inlet opening of the nozzle (5) is arranged above the surface of the water and the outlet opening of the nozzle (5) is arranged below the surface of the water.

8. A device according to Claim 6, **characterised in that** the longitudinal axis of the nozzle (5) is arranged to be substantially perpendicular, and **in that** the inlet opening of the nozzle (5) is arranged below the surface of the water and the outlet opening of the nozzle (5) is arranged above the surface of the water.

9. A device according to one of Claims 1 to 8, **characterised in that** the through opening (5) is closable by a mechanical flap or by a valve.

10. A device according to one of Claims 7 to 9, **characterised in that** a plurality of through openings (5) is arranged between the primary chamber (2) and the reaction chamber (8), with the through openings (5) opening if there are differing pressure differentials between the primary chamber (2) and the reaction chamber (8).

11. A method for eliminating hydrogen,
- in which the rise in pressure brought about by the release of hydrogen within a primary chamber (2) in respect of a reaction chamber (8) arranged outside the primary chamber (2) is exploited in order to generate, without the supply of external energy, a gas flow through a through opening (5) connecting the primary chamber (2) and the reaction chamber (8),
- in which the hydrogen passing through is at least partly subjected to recombination in the region of the through opening (5) with the aid of the catalyst element (6),
- in which a drop in pressure is produced within the through opening (5) constructed in the form of a nozzle, and
- in which at least one means influencing the conditions of recombination is introduced with the aid of the drop in pressure.

12. A method according to Claim 11, in which an oxygen-containing gas, preferably air, and/or water is supplied with the aid of the negative pressure within the through opening (5).

13. A method according to Claim 11 or 12, in which a plurality of through openings (5) is used, and in which the different through openings (5) open and close automatically in dependence on the pressure prevailing in the primary chamber (2) and thus differing cross-sections of flow are created.

## Revendications

1. Dispositif permettant d'éliminer de l'hydrogène équipé
- d'un espace primaire (2) présentant la source de formation (1) de l'hydrogène,
- d'un espace de réaction (9) et
- d'une ouverture de passage (5) aménagée comme buse, qui relie l'espace primaire (2) et l'espace de réaction (9) entre eux,
**caractérisé**
- **en ce que** l'espace de réaction (9) est disposé à l'extérieur de l'espace primaire (2), de sorte que, dans le cas d'une augmentation de la pression à l'intérieur de l'espace primaire (2), il se forme automatiquement un écoulement de gaz dans l'ouverture de passage (5), et
- **en ce que** dans l'ouverture de passage (5) est disposé un élément catalyseur (6) poreux, qui est recouvert au moins partiellement d'un matériau catalyseur.

2. Dispositif selon la revendication 1, **caractérisé en ce que** l'ouverture de passage (5) est conçue comme une buse venturi.

3. Dispositif selon la revendication 1 ou 2, **caractérisé en ce que** de l'oxygène est amené par l'intermédiaire d'une conduite (14) et **en ce que** l'oxygène entre dans l'hydrogène dans la zone d'entrée de la buse (5).

4. Dispositif selon la revendication 1, 2 ou 3, **caractérisé en ce que** de l'eau est amenée par l'intermédiaire d'une conduite (15) et **en ce que** l'eau entre dans le flux de mélange gazeux à l'intérieur de la buse (5), de préférence dans la zone de sortie.

5. Dispositif selon l'une quelconque des revendications 1 à 4, **caractérisé**
- **en ce qu'**il est prévu un espace secondaire (7) directement contigu à l'espace primaire (2),
- **en ce qu'**il est prévu une conduite de liaison (8) entre l'espace primaire (2) et l'espace secondaire (7),
- **en ce que** l'ouverture de passage (5) est disposée entre l'espace secondaire (7) et l'espace de réaction (9) et
- **en ce que** l'ouverture de passage (5) relie l'espace primaire (2) à l'espace de réaction (9) via l'espace secondaire (7)

6. Dispositif selon l'une quelconque des revendications 1 à 5, **caractérisé en ce que** l'espace de réaction (9) et éventuellement l'espace secondaire (7) sort remplis partiellement d'eau et de préférence de telle façon que la conduite de liaison (8) plonge dans l'eau disposée dans l'espace secondaire (7).

7. Dispositif selon la revendication 6, **caractérisé en ce que** l'axe longitudinal de la buse (5) est disposé sensiblement verticalement et **en ce que** l'ouverture d'entrée de la buse (5) est disposée au-dessus de la surface d'eau et l'ouverture de sortie de la buse (5) au-dessous de la surface d'eau.

8. Dispositif selon la revencication 6,
**caractérisé en ce que** l'axe longitudinal de la buse (5) est disposé sensiblement verticalement et **en ce que** l'ouverture d'entrée de la buse (5) est disposée au-dessous de la surface d'eau et l'ouverture de sortie de la buse (5) au-dessus de la surface d'eau.

9. Dispositif selon l'une quelconque des revendications 1 à 8, **caractérisé en ce que** l'ouverture de sortie (5) peut être verrouillée par un clapet mécanique ou par une vanne.

10. Dispositif selon l'une quelconque des revendications 7 à 9, **caractérisé en ce qu'**une pluralité d'ouvertures de passage est disposée entre l'espace primaire (2) et l'espace de réaction (8), les ouvertures de passage (5) s'ouvrant avec différentes différences de pression entre l'espace primaire (2) et l'espace de réaction (8).

11. Procédé permettant d'éliminer de l'hydrogène,
- dans lequel on utilise l'augmentation de pression se formant par la libération de l'hydrogène à l'intérieur d'un espace primaire (2) par rapport à un espace de réaction (8) disposé à l'extérieur de l'espace primaire (2), pour générer sans apport d'énergie extérieure un écoulement gazeux par une ouverture de passage (5) reliant l'espace primaire (2) et l'espace de réaction (8),
- dans lequel l'hydrogène passant est recombiné au moins partiellement dans la zone de l'ouverture de passage à l'aide de l'élément catalyseur (6),
- dans lequel une chute de pression est générée à l'intérieur de l'ouverture de passage (5) conçue en forme de buse et
- dans lequel au moins un agent influant sur les conditions de la recombinaison est mis en oeuvre à l'aide de la chute de pression.

12. Procédé selon la revendication 11, dans lequel un gaz oxygéné, de préférence de l'air, et/ou de l'eau est amené à l'aide de la dépression à l'intérieur de l'ouverture de passage (5).

13. procédé selon la revendication 11 ou 12, dans lequel une pluralité d'ouvertures de passage (5) est utilisée et avec lequel les différentes ouvertures de passage (5) s'ouvrent et se ferment automatiquement indépendamment de la pression présente dans l'espace primaire (2) de sorte que des conditions d'écoulement différentes soient créées.
